(19) **Europäisches Patentamt**
**European Patent Office**
**Office européen des brevets**

(11) **EP 4 417 938 A1**

(12) **EUROPEAN PATENT APPLICATION**

(43) Date of publication:
**21.08.2024 Bulletin 2024/34**

(21) Application number: **24151182.3**

(22) Date of filing: **10.01.2024**

(51) International Patent Classification (IPC):
**G01C 21/16** (2006.01)    **G01C 25/00** (2006.01)
**G01S 17/89** (2020.01)

(52) Cooperative Patent Classification (CPC):
**G01C 21/1652; G01C 21/1656; G01C 25/005; G01S 17/89**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.02.2023 IN 202311010469**
**05.04.2023 US 202318296232**

(71) Applicant: **Honeywell International Inc.**
**Charlotte, NC 28202 (US)**

(72) Inventors:
• **VAITHILINGAM, Ganesh Kumar**
**Charlotte, 28202 (US)**
• **ARUNA, Delhi**
**Charlotte, 28202 (US)**
• **ARUMUGAM, Shobana**
**Charlotte, 28202 (US)**
• **RAJENDRAN, Prema**
**Charlotte, 28202 (US)**

(74) Representative: **Haseltine Lake Kempner LLP**
**Cheapside House**
**138 Cheapside**
**London EC2V 6BJ (GB)**

(54) **ALIGNING AN INERTIAL NAVIGATION SYSTEM (INS)**

(57)    A method to determine a precise location for alignment of an inertial navigation system (INS) is provided. The method includes aiming an imaging and ranging system mounted on a gimbal on a vehicle at a machine-readable image at a known location, determining an azimuth, an elevation angle, and a slant range to the machine-readable image, capturing the machine-readable image, decoding the known location from the machine-readable image, deriving the precise location of the vehicle from the known location, the azimuth, the elevation angle and the slant range, and aligning the INS based on the precise location.

300

310 — Aiming an imaging and ranging system mounted on a gimbal at a machine-readable image at a known location

320 — Determining azimuth, elevation angle and slant range to the machine-readable image

330 — Capturing the machine-readable image

340 — Decoding the known location from the machine-readable image

350 — Deriving a precise location from the known location, the azimuth, the elevation angle and the slant range

360 — Provide the precise location to the INS

FIG. 3

Processed by Luminess, 75001 PARIS (FR)

**Description**

**CROSS- REFERENCE TO RELATED APPLICATION**

This application claims priority to Indian Application No. 202311010469 filed on February 16, 2023 and titled "ALIGNING AN INERTIAL NAVIGATION SYSTEM (INS)", the contents of which are incorporated herein in its entirety.

**BACKGROUND**

An inertial navigation system (INS) is a navigation device that uses dead reckoning to calculate the position, orientation and velocity of an object such as a vehicle. The INS uses data from a few different sensors, e.g., accelerometers, and gyroscopes, in these calculations. Unfortunately, the output computed by the INS tends to drift over time because the INS integrates the error and noise along with the sensor data. To provide data that is reliable for navigation, the INS uses initial alignment and in-route alignment techniques to correct for drift errors, and other sensor and computation errors that increase over time.

To perform alignment, the INS uses an accurate vehicle position form an external source. For example, if the initial position of the vehicle is known, it can be entered into the INS directly. If the position is unknown, an accurate measure of the position of the vehicle can be provided by a Global Navigation Satellite System (GNSS) receiver, e.g., a Global Positioning System (GPS) receiver. Other GNSS receivers that may be used to provide the initial position include BeiDou, Galileo, GLONASS, IRNSS, and QZSS. Similarly, current in-flight alignment of an INS typically uses a GNSS-based technique, where the vehicle position from a GNSS receiver is used to realign the INS. Here, the accuracy of the INS post-alignment is bound to the position accuracy of the GNSS receiver at the time of alignment.

Urban Air Mobility (UAM) refers to an aviation system that will use highly automated vehicles that will operate and transport passengers and cargo at lower altitudes and within urban and suburban areas. In this environment, the UAM vehicles will be operating in close quarters during all phases of flight including takeoff, landing and in-flight. Further, UAM vehicles may operate at times in GNSS denied environments. In terms of safety, it will be paramount that such UAM vehicles have access to data on their position, orientation, and velocity that exceeds the accuracy of a typical INS even when aligned using data from a GNSS receiver.

Fighter airplanes and helicopters that participate in combat operations are also likely to traverse GNSS denied environments. The operational range and Weapon delivery accuracy of these vehicles will be limited in a GNSS denied environment.

Therefore, there is a need in the art for an INS with increased accuracy compared to conventional INS and with reduced dependency on data from GNSS receivers.

**SUMMARY**

A method to determine a precise location for alignment of an inertial navigation system (INS) is provided. The method includes aiming an imaging and ranging system mounted on a gimbal on a vehicle at a machine-readable image at a known location, determining an azimuth, an elevation angle, and a slant range to the machine-readable image, capturing the machine-readable image, decoding the known location from the machine-readable image, deriving the precise location of the vehicle from the known location, the azimuth, the elevation angle and the slant range, and aligning the INS based on the precise location.

**BRIEF DESCRIPTION OF THE DRAWINGS**

Embodiments of the present invention can be more easily understood and further advantages and uses thereof more readily apparent, when considered in view of the description of the preferred embodiments and the following figures in which:

Figure 1A is a perspective view of one embodiment of a system with an inertial navigation system that is aligned based on data read from a machine-readable image.

FIG. 1B is a front view of one embodiment of an imaging and ranging system for use in the system of FIG. 1A.

FIG. 2 is a block diagram of one embodiment of a system for aligning an inertial navigation system.

FIG. 3 is a flow chart of one embodiment of a process for aligning an inertial navigation system.

FIGs. 4A and 4B are images of a distorted machine-readable image and a corrected machine-readable image, respectively, for use in aligning an inertial navigation system.

In accordance with common practice, the various described features are not drawn to scale but are drawn to emphasize features relevant to the present invention. Reference characters denote like elements throughout figures and text.

## DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be used and that logical, mechanical and electrical changes may be made without departing from the scope of the present invention. The following detailed description is, therefore, not to be taken in a limiting sense.

Embodiments of the present invention enable improved operation of an Inertial Navigation System (INS) by aligning the INS using accurate position data that is computed as a relative position from a known location. These embodiments use machine-readable images positioned on targets at geographic reference (known) locations or positions along with slant range, azimuth, and elevation angle to the target to compute the position of the INS.

Embodiments of the present invention encode various data in the machine-readable image, including but not limited to, the position of the target. The position may be represented as latitude, longitude, and altitude of the target. Alternatively, other data that identifies the position may be used. Additionally, the machine-readable image may also include a security code to authenticate the machine-readable image, data indicative of the orientation of the machine-readable image, and any other appropriate data to be used in providing the position data to the vehicle for use in aligning the INS.

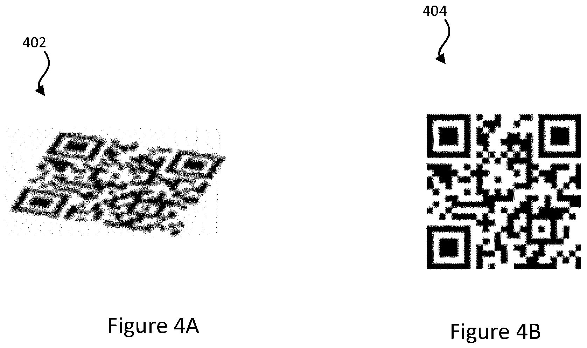

Embodiments of the present invention use a gimbal-mounted optical imaging and infrared (IR) ranging system to read the machine-readable images installed at geographic reference locations and to determine an azimuth, elevation angle and a slant range to the target. In one embodiment, the machine-readable image is a bar code. For purposes of this specification, the term "machine-readable image" includes, but it not limited to, two-dimensional (2D) bar codes, Data Matrix codes, Quick Response (QR) codes, High-Capacity Color Barcodes (HCCB), or other standardized or proprietary geometric scheme that enables capturing of data using an optical reader. A 2D barcode is a graphical image that stores information horizontally and vertically in an image (See FIG. 4B). The machine-readable image could be a static display for a stationary platform or dynamically variable for a moving platform such as an aircraft carrier warship.

Embodiments of the present invention may be used to improve overall performance and accuracy of INSs associated with aircraft, watercraft, or land-based vehicles. Further, embodiments of the present invention reduce dependence on Global Navigation Satellite Systems (GNSS) for INS operation and enable high reliability of INS operation in GNSS-denied environments as explained below. Accuracy of INS operation implementing embodiments of the present invention can also remain high for longer periods of time when machine-readable images are used at various waypoints during operation. Embodiments of the present invention, furthermore, enable efficient autonomous takeoff and landing performance when applied to aircraft due to the improved position accuracy of the INS. Finally, the improved INS performance of embodiments of the present invention also improves vehicle detect and avoidance performance.

The exemplary embodiment described in detail below illustrates use of an embodiment of the present invention on an aircraft. It is understood that this embodiment is provided by way of example and not by way of limitation. The principles of the present invention are equally applicable to an INS used in any appropriate type of vehicle or personal navigation device.

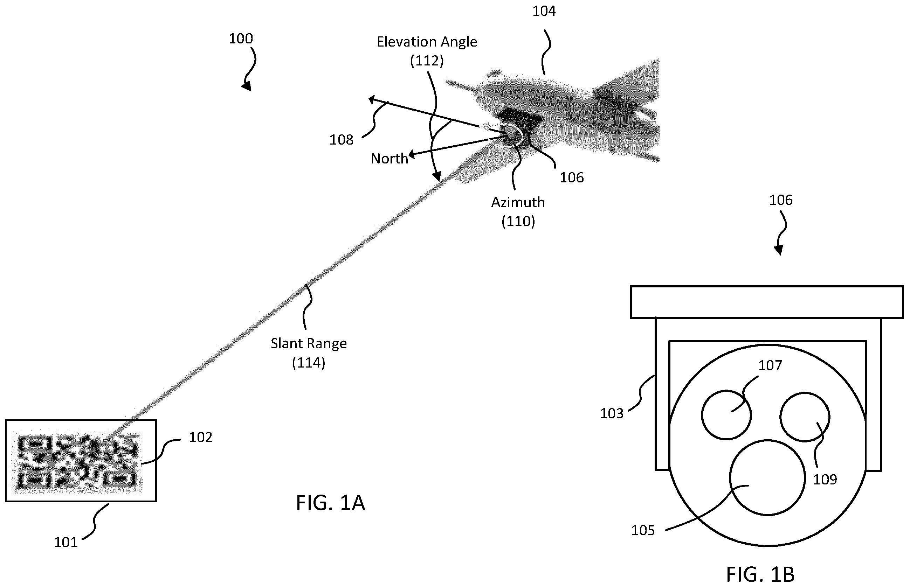

FIG. 1A is a perspective view of one embodiment of a system, indicated generally at 100, with an inertial navigation system (INS) that is aligned based on data read from a machine-readable image 102 disposed on target 101. In this embodiment, the INS is disposed on vehicle 104, such as an aircraft. As explained above, system 100 can be implemented on other types of vehicles and systems that use an INS. System 100 also includes gimbal-mounted imaging and ranging system 106. System 106 includes, for example, optical cameras and a laser range finder including an infrared transmitter and receiver. One embodiment of a suitable imaging and ranging system is shown in FIG. 1B and is described further below. At a high level, the optical camera of system 106 enables scanning of machine-readable image 102 on target 101 with a known location. Further, the infrared transmitter and receiver of system 106 enables detecting a slant range from vehicle 104 to the target 101. Although system 106 may incorporate a laser range finder to determine the distance to the target 101, system 106 may include other appropriate systems for determining the distance to the target, including laser ranging, radar ranging, or any other appropriate existing or later developed ranging technology.

To align the INS of vehicle 104, system 100 receives a precise measure of the location of vehicle 104, e.g., at the beginning of INS operation. It is noted that after initializing the INS, additional alignment by reception of a precise measure of location may be performed as needed based on INS performance and mission necessity. In conventional systems, data from a GNSS receiver could be used for this purpose. However, in the case of Urban Air Mobility (UAM), aircraft may often operate in GNSS-denied environments, e.g., areas with poor or no GNSS reception. Thus, a different source of accurate position information is needed for proper INS operation. In operation, system 100 decodes data indicating the location of the target 101 using the machine-readable image 102 and uses that data to derive data on the precise position of Vehicle 104. This data is then used to align the INS of vehicle 104.

In some embodiments of the present invention, targets 101 bearing a machine-readable image 102 encoded with the precise location of the target 101 are installed at multiple geographical locations in the area that the INS is intended to operate such as landing and takeoff spots or at waypoint locations along transit routes. Each time a target 101 bearing a machine-readable image 102 is encountered, the INS is enabled to be realigned thereby improving the accuracy of its operation over its entire operational period.

FIG. 1B is a front view of one embodiment of imaging and ranging system 106 of FIG. 1A. It is understood that the system 106 of FIG. 1B is provided by way of illustration and not by way of limitation. In other embodiments, system 106 uses other known or later developed imaging and ranging systems, including gimbals and platforms for directing the system toward a target.

In this embodiment, system 106 includes a gimbal 103. Gimbal 103 is an assembly that enables mounting and orienting system 106 toward a target and provides for rotation, e.g., pivots, in at least two axes (azimuth and elevation or yaw and pitch). System 106 also includes an optical or infrared (IR) camera 105 to capture the machine-readable image. In one embodiment, camera 105 includes a forward-looking Infrared (FLIR) camera. Once oriented, system 106 uses the orientation of the gimbal 103 to measure an azimuth angle 110 and an elevation angle 112 to the target. As illustrated, system 100 has a north, east, down (NED) frame of reference with a trajectory 108. It is noted that the NED frame of reference is used by way of example and not by way of limitation. In other embodiments, other appropriate frames of reference can be used such as east, north, up (ENU) or similar. The azimuth 110 is measured as the angle between trajectory 108 and true north. System 106 also includes laser 107 and an optical receiver 109 to measure a slant range 114 to the target 101 having the machine-readable image 102 encoded with the location of the target. System 106 transmits laser pulses at target 101 from laser 107. Reflections of the laser pulses are received at optical receiver 109. Based on the transmitted and received pulses, system 106 determines the slant range to target 101.

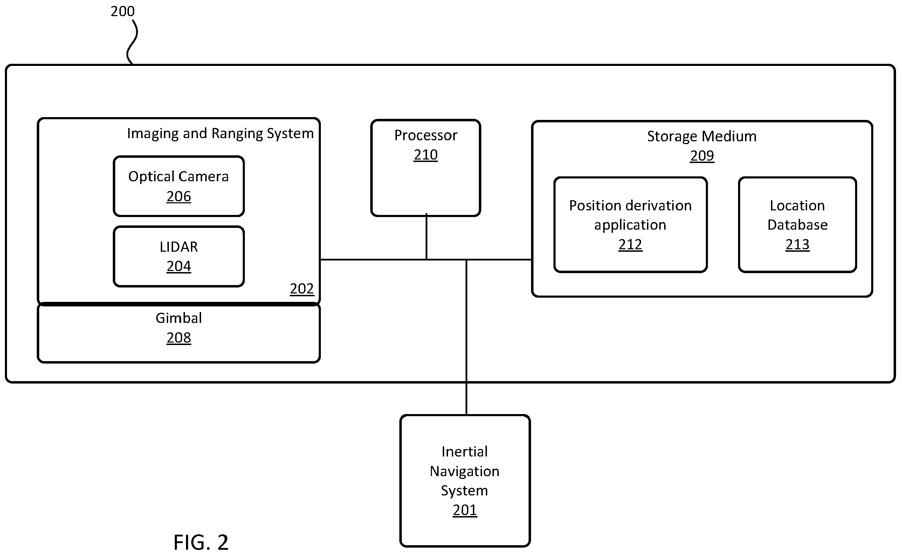

FIG. 2 is a block diagram of one embodiment of a system, indicated generally at 200, for aligning an inertial navigation system 201. System 200 includes an imaging and ranging system 202 that is mounted on gimbal 208. Gimbal 208 provides rotation in at least two axes (e.g., pitch and yaw) to enable directing imaging and ranging system 202 to be directed at a target. Advantageously, the target includes a machine-readable image, e.g., a bar code, on a surface of the target that has a position or location of the target encoded in the machine-readable image. Imaging and ranging system 202 include optical camera 206 that is configured to read the machine-readable image on the target. Additionally, imaging and ranging system 202 includes laser range finder 204 that enables system 200 to determine a distance to the target. As mentioned previously, in other embodiments, laser range finder 204 may be replaced with other suitable system for determining the slant range to the target, e.g., ranging mechanisms that include laser ranging, radar ranging, or any other existing or later developed ranging technology.

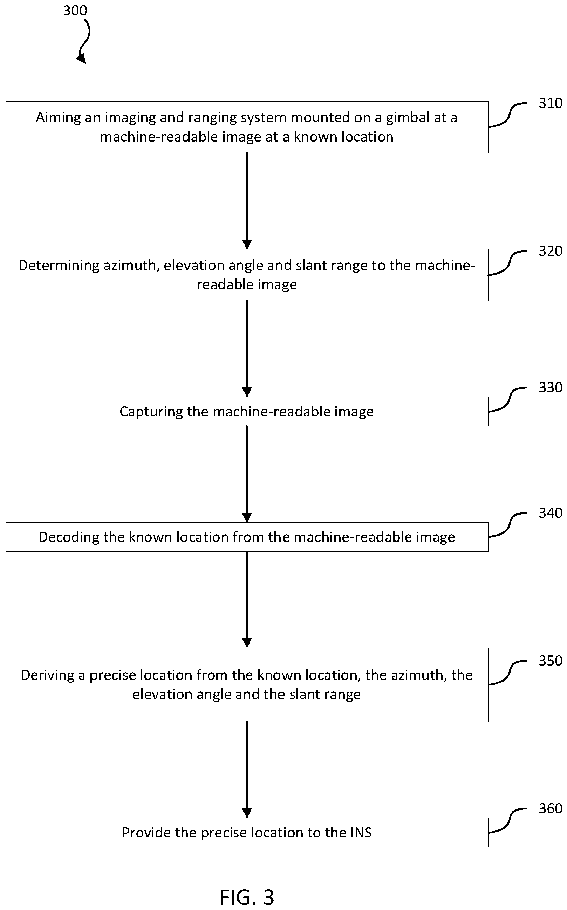

System 200 also includes a processor 210 and storage medium 209. Processor 210 may be implemented using one or more processors, a field programmable gate array (FPGA), an application specific integrated circuit (ASIC), a controller or other circuit used to execute instructions in an electronic circuit. Storage medium 209 can include any available storage media (or computer readable medium) that can be accessed by a general purpose or special purpose computer or processor, or any programmable logic device. Suitable computer readable media may include storage or memory media such as semiconductor, magnetic, and/or optical media, and may be embodied as a program product comprising instructions stored in non-transitory computer readable media, such as random access memory (RAM), read-only memory (ROM), non-volatile RAM, electrically-erasable programmable ROM, flash memory, or other storage media. Storage medium 209 may also include one or more databases to store acquired data. Storage medium 209 can be implemented by appropriate circuitry. Storage medium 209 stores program instructions including position derivation application 212 as well as database 213 that may include locations of targets containing machine-readable images encoded with position data. Position derivation application 212, when executed by processor 210, uses data from imaging and ranging system 202 and gimbal 208 to determine the precise location of system 200. INS 201 uses this precise location from system 200so that INS 201 is enabled to provide accurate guidance to a vehicle. The process used by position derivation application 212 is described below with respect to FIG. 3.

FIG. 3 is a flow chart of one embodiment of a process, indicated generally at 300, for aligning an inertial navigation system. Process 300 begins at block 310 by aiming an imaging and ranging system 202 mounted on a gimbal 208 at a machine-readable image at a known location. In some embodiments, the imaging and ranging system 202 is manually aimed by a user. In other embodiments, the imaging and ranging system 202 is controlled by processor 210 or by a host vehicle master controller to automatically detect the presence and location of the machine-readable image.

In one embodiment, to alert or inform the vehicle operator, pilot or the controller to detect the machine-readable image automatically, a database 213 containing the locations of all machine-readable images can be stored in the storage medium 209 or a storage medium in the host vehicle. Once aimed, process 300 determines the azimuth, elevation angle and slant range in a NED frame to the machine-readable image at block 320. It is understood that the NED frame is used by way of example and not by way of limitation in this description. Other appropriate frames can also be used such as ENU, or the like. This azimuth and the elevation angle, in one embodiment, are captured from the orientation of the gimbal 208 associated with the imaging and ranging system 202. In one embodiment, process 300 uses the ranging function of imaging and ranging system 202 to determine the slant range to a target containing the machine-readable image. For example, laser range finder 204 transmits an infrared signal at the target and receives reflected infrared signals from the target. Based on the transmitted and received infrared signals, imaging and ranging system 202 determines the slant range to the target containing the machine-readable image.

At block 330, process 300 captures the machine-readable image using, for example, optical camera 206 of system 200. In some instances, the captured machine-readable image may be skewed depending on, for example, the orientation and motion of the vehicle (e.g., aircraft). Thus, it may be necessary to remove any distortions in the captured machine-readable image to enable proper decoding of the machine-readable image. For example, as shown in FIG. 4A, captured machine-readable image 402 may be determined to be distorted using conventional or later-developed techniques for image processing. Assuming the captured machine-readable image 402 is determined to be distorted, process 300 applies known or later-developed image processing and noise filtration techniques to remove the distortion from the captured machine-readable image 402 to produce a machine-readable image 404 that conforms to the machine-readable image located at the target.

Process 300 determines a location of the target containing the machine-readable image so that a precise location of system 200 can be determined. At block 340, process 300 decodes the known location of the target containing the machine-readable image from the machine-readable image. For example, the known location decoded from the machine-readable image, in one embodiment, includes latitude, longitude and altitude for the known location, e.g., Latitude: 11.62284999520596, Longitude: 79.54944313884545, and Altitude: 87 m.

Process 300 determines the precise location of system 200 (and INS 201) using the known location of the target containing the machine-readable image at block 350. For example, process 300 derives a relative position of system 200 and uses the relative position of system 200 to compute its precise location. There are many ways to calculate a precise position from the relative position from a known location. One example is provided in more detail below. It is understood that embodiments of the present invention are not limited to the specific calculations provided below. The calculations below are provided by way of example and not by way of limitation. The precise location derived at block 350 is at the time that the machine-readable image was read. Process 300 provides this precise location to the INS at block 360 and the INS uses this precise location to improve the accuracy of the INS.

Returning to block 350, in one embodiment, to derive the relative position, process 300 uses the known location of the target containing the machine-readable image. Additionally, process 300 uses the azimuth, the elevation angle and the slant range determined, for example, by the imaging and ranging system 202, to determine a precise position for the system 200 (and INS 201) relative to the known location of the target containing the machine-readable image.

In one embodiment, the relative position of the vehicle measured from the known location of the target containing the machine-readable image in terms of slant range, azimuth and elevation angle is in the local geodetic spherical coordinate system. This relative position in the spherical coordinate system is converted to a cartesian system in the NED frame as given in the below equations:

$$x_{\text{NED}} = slant\_range .* \cos(elevation) .* \cos(azimuth)$$

$$y_{\text{NED}} = slant\_range .* \cos(elevation) .* \sin(azimuth)$$

$$z_{\text{NED}} = slant\_range .* \sin(elevation)$$

Where: $x_{\text{NED}}$, $y_{\text{NED}}$ and $z_{\text{NED}}$ are the Vehicle relative position in NED cartesian frame and *slant range, azimuth, elevation* are the Vehicle relative position in NED spherical coordinate system.

To derive the Vehicle position accurately, the World Geodetic System 1984 (WGS84) datum is adopted in this proposal. However, any latest available system can also be used. The vehicle position is derived as given below.

$$R_N = \frac{R_{Earth}}{\sqrt{1 - (2f - f^2)(\sin\theta)^2}}$$

$$R_M = R_N \frac{1 - (2f - f^2)}{\sqrt{1 - (2f - f^2)(\sin\theta)^2}}$$

$$dLat = \tan^{-1}\frac{1}{R_M} x_{NED}$$

$$V_{Lat} = Ref_{Lat} + dLat$$

$$dLong = \tan^{-1}\frac{1}{R_N \cos V_{Lat}} y_{NED}$$

$$V_{Long} = Ref_{Long} + dLong$$

$$V_{Alt} = z_{NED} + Ref_{Alt}$$

Where:

$R_N$ - Prime vertical radius of curvature,

$R_M$ - Meridian radius of curvature,

$R_{Earth}$ - Radius of earth = 6378137 m

$Ref_{Lat}$ - Ref. position latitude in radians (machine-readable image latitude)

$Ref_{Long}$ - Ref. position longitude in radians (machine-readable image longitude)

$Ref_{Alt}$ - Ref. position altitude in radians (machine-readable image altitude)

$V_{Lat}$ - Vehicle latitude in radians

$V_{Long}$ - Vehicle longitude in radians

$V_{Alt}$ - Vehicle altitude in meters

$f$ - flattening of earth = 1/298.257223563

$\Theta\theta$ - Reference e position Latitude in radians (same as $Ref_{Lat}$)

## EXAMPLE EMBODIMENTS

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.
Example 1 includes a method to determine a precise location for alignment of an inertial navigation system (INS). The method includes: aiming an imaging and ranging system mounted on a gimbal on a vehicle at a machine-readable image at a known location; determining an azimuth, an elevation angle, and a slant range to the machine-readable image; capturing the machine-readable image; decoding the known location from the machine-readable image; deriving the precise location of the vehicle from the known location, the azimuth, the elevation angle and the slant range; and aligning the INS based on the precise location.

Example 2 include the method of example 1, wherein aligning the imaging and ranging system comprises manually orienting the gimbal so that the imaging and ranging system is directed toward the machine-readable image.

Example 3 includes the method of any of examples 1 and 2, wherein determining the azimuth and the elevation angle comprises determining the azimuth and the elevation angle based on an orientation of the imaging and ranging system mounted on the gimbal.

Example 4 includes the method of any of examples 1 to 3, wherein capturing the machine-readable image comprises capturing the machine-readable image with a camera of the imaging and ranging system.

Example 5 includes the method of any of examples 1 to 4, wherein capturing the machine-readable image comprises capturing a bar code, 2D bar code, Data Matrix code, Quick Response (QR) code, High Capacity Color Barcode (HCCB), or other standardized or proprietary geometric coding scheme.

Example 6 includes the method of any of claim 1 to 5, wherein decoding the known location comprises decoding latitude, longitude and altitude of the known location from the machine-readable image.

Example 7 includes the method of any of examples 1 to 6, wherein deriving the precise location of the vehicle comprises converting a relative position in a local geodetic spherical coordinate system to cartesian coordinates in a North, East, Down (NED) frame in which:

$$x_{\mathrm{NED}} = slant\_range .* \cos(elevation) .* \cos(azimuth)$$

$$y_{\mathrm{NED}} = slant\_range .* \cos(elevation) .* \sin(azimuth)$$

$$z_{\mathrm{NED}} = slant\_range .* \sin(elevation)$$

Where: $x_{\mathrm{NED}}$, $y_{\mathrm{NED}}$ and $z_{\mathrm{NED}}$ represent the cartesian coordinates of the relative position in the NED frame and *slant_range, azimuth,* and *elevation* represent the spherical coordinates of the relative position.

Example 8 includes the method of any of examples 1 to 7, and further comprising determining the precise location of the vehicle in latitude, longitude, and altitude using the known location and a relative position of the vehicle.

Example 9 includes the method of any of examples 1 to 8, and further comprising processing the machine-readable image to remove distortions caused by an orientation of the gimbal-mounted imaging and ranging system relative to an orientation of the machine-readable image.

Example 10 includes an apparatus for determining a precise location for aligning an inertial navigation system (INS), the apparatus comprising: an imaging and ranging system; a gimbal, disposed on a vehicle, the imaging and ranging system mounted on the gimbal wherein the imaging and ranging system is configured to be aimed at a target containing a machine-readable image; a processor configured to execute program instructions, which, when executed by the processor cause the processor to perform a method including: determining an azimuth and an elevation angle and a slant range to the machine-readable image; capturing the machine-readable image with the imaging and ranging system; decoding a known location of the target using the machine-readable image; deriving the precise location of the vehicle from the known location, and the azimuth, the elevation angle and the slant range to the machine-readable image; and aligning the INS based on the precise location.

Example 11 includes the apparatus of example 10, wherein the imaging and ranging system comprises an optical camera configured to capture the machine-readable image, and a LIDAR configured to determine a distance to the machine-readable image.

Example 12 includes the apparatus of any of examples 10 and 11, wherein the gimbal comprises an assembly that is configured for mounting the imaging and ranging system, wherein the assembly is configured to pivot in at least two axes.

Example 13 includes the apparatus of any of examples 10 to 12, wherein determining the azimuth and the elevation angle comprises determining the azimuth and the elevation angle based on an orientation of the imaging and ranging system mounted on the gimbal.

Example 14 includes the apparatus of any of examples 10 to 13, wherein capturing the machine-readable image comprises capturing a bar code, 2D bar code, Data Matrix code, Quick Response (QR) code, High Capacity Color Barcode (HCCB), or other standardized or proprietary geometric coding scheme.

Example 15 includes the apparatus of any of examples 10 to 14, wherein decoding the known location comprises decoding latitude, longitude, and altitude of the known location from the machine-readable image.

Example 16 incudes the apparatus of any of examples 10 to 15, wherein deriving the precise location of the vehicle comprises converting a relative position in a local geodetic spherical coordinate system to cartesian coordinates in a North, East, Down (NED) frame in which:

$$x_{\mathrm{NED}} = slant\_range .* \cos(elevation) .* \cos(azimuth)$$

$$y_{\mathrm{NED}} = slant\_range .* \cos(elevation) .* \sin(azimuth)$$

$$z_{\mathrm{NED}} = slant\_range .* \sin(elevation)$$

Where: $x_{\mathrm{NED}}$, $y_{\mathrm{NED}}$ and $z_{\mathrm{NED}}$ represent the cartesian coordinates of the relative position in the NED frame and *slant_range, azimuth,* and *elevation* represent the spherical coordinates of the relative position.

Example 17 includes the apparatus of any of examples 10 to 16, and further comprising determining the precise location of the vehicle in latitude, longitude, and altitude using the known location and a relative position of the vehicle

Example 18 includes the apparatus of any of examples 10 to 17, wherein aligning the INS based on the precise location comprises aligning the INS using the precise location of the vehicle determined using the known location and a relative position of the vehicle.

Example 19 includes a program product comprising a non-transitory computer readable medium on which program instructions configured to be executed by a processor are embodied, which program instructions, when executed by the processor cause the processor to perform a method comprising: determining azimuth and elevation angle and slant range to a target containing a machine-readable image; capturing the machine-readable image from an imaging and ranging system; decoding a known location of the target using the machine-readable image; deriving a precise location from the known location, and the azimuth, elevation angle and slant range to the machine-readable image; and aligning an INS based on the precise location.

Example 20 includes the program product of claim 19, wherein deriving the precise location comprises converting a relative position in a local geodetic spherical coordinate system to cartesian coordinates in a North, East, Down (NED) frame in which:

$$x_{\mathrm{NED}} = slant\_range .* \cos(elevation) .* \cos(azimuth)$$

$$y_{\mathrm{NED}} = slant\_range .* \cos(elevation) .* \sin(azimuth)$$

$$z_{\mathrm{NED}} = slant\_range .* \sin(elevation)$$

Where: $x_{\mathrm{NED}}$, $y_{\mathrm{NED}}$ and $z_{\mathrm{NED}}$ represent the cartesian coordinates of the relative position in the NED frame and *slant_range, azimuth,* and *elevation* represent the spherical coordinates of the relative position.

**Claims**

1. A method to determine a precise location for alignment of an inertial navigation system (INS), the method comprising:

   aiming an imaging and ranging system mounted on a gimbal on a vehicle at a machine-readable image at a known location (310);
   determining an azimuth, an elevation angle, and a slant range to the machine-readable image (320);
   capturing the machine-readable image (330);
   decoding the known location from the machine-readable image (340);
   deriving the precise location of the vehicle from the known location, the azimuth, the elevation angle and the slant range (350); and
   aligning the INS based on the precise location (350).

2. The method of claim 1, wherein determining the azimuth and the elevation angle comprises determining the azimuth and the elevation angle based on an orientation of the imaging and ranging system mounted on the gimbal.

3. The method of claim 1, wherein capturing the machine-readable image comprises capturing a bar code, 2D bar code, Data Matrix code, Quick Response (QR) code, High Capacity Color Barcode (HCCB), or other standardized or proprietary geometric coding scheme.

4. The method of claim 1, wherein decoding the known location comprises decoding latitude, longitude and altitude of the known location from the machine-readable image.

5. The method of claim 1, wherein deriving the precise location of the vehicle comprises converting a relative position in a local geodetic spherical coordinate system to cartesian coordinates in a North, East, Down (NED) frame in which:

$$x_{NED} = slant\_range. * \cos(elevation). * \cos(azimuth)$$

$$y_{NED} = slant\_range. * \cos(elevation). * \sin(azimuth)$$

$$z_{NED} = slant\_range. * \sin(elevation)$$

Where: $x_{NED}$, $y_{NED}$ and $z_{NED}$ represent the cartesian coordinates of the relative position in the NED frame and *slant_range, azimuth,* and *elevation* represent the spherical coordinates of the relative position.

6. The method of claim 1, and further comprising processing the machine-readable image to remove distortions caused by an orientation of the gimbal-mounted imaging and ranging system relative to an orientation of the machine-readable image.

7. An apparatus for determining a precise location for aligning an inertial navigation system (INS), the apparatus comprising:

> an imaging and ranging system;
> a gimbal, disposed on a vehicle, the imaging and ranging system mounted on the gimbal wherein the imaging and ranging system is configured to be aimed at a target containing a machine-readable image;
> a processor configured to execute program instructions, which, when executed by the processor cause the processor to perform a method including:

>> determining an azimuth and an elevation angle and a slant range to the machine-readable image;
>> capturing the machine-readable image with the imaging and ranging system;
>> decoding a known location of the target using the machine-readable image;
>> deriving the precise location of the vehicle from the known location, and the azimuth,
>> the elevation angle and the slant range to the machine-readable image; and aligning the INS based on the precise location.

8. The apparatus of claim 7, wherein the imaging and ranging system comprises an optical camera configured to capture the machine-readable image, and a LIDAR configured to determine a distance to the machine-readable image.

9. The apparatus of claim 7, wherein the gimbal comprises an assembly that is configured for mounting the imaging and ranging system, wherein the assembly is configured to pivot in at least two axes.

10. The apparatus of claim 7, wherein determining the azimuth and the elevation angle comprises determining the azimuth and the elevation angle based on an orientation of the imaging and ranging system mounted on the gimbal.

FIG. 1A

FIG. 1B

EP 4 417 938 A1

200

**Imaging and Ranging System**

Optical Camera
206

LIDAR
204

202

Gimbal
208

Processor
210

**Storage Medium**
209

Position derivation
application
212

Location
Database
213

Inertial
Navigation
System
201

FIG. 2

300

| Aiming an imaging and ranging system mounted on a gimbal at a machine-readable image at a known location | 310 |

| Determining azimuth, elevation angle and slant range to the machine-readable image | 320 |

| Capturing the machine-readable image | 330 |

| Decoding the known location from the machine-readable image | 340 |

| Deriving a precise location from the known location, the azimuth, the elevation angle and the slant range | 350 |

| Provide the precise location to the INS | 360 |

FIG. 3

402

Figure 4A

404

Figure 4B

Europäisches
Patentamt

European
Patent Office

Office européen
des brevets

## EUROPEAN SEARCH REPORT

Application Number

EP 24 15 1182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/178708 A1 (ZHANG GENGSHENG [US] ET AL) 21 July 2011 (2011-07-21)<br>* paragraphs [0014], [0016], [0017], [0026], [0032] - [0044] *<br>* figure 2, *<br>- - - - - | 1-10 | INV.<br>G01C21/16<br>G01C25/00<br>G01S17/89 |
| A | CN 115 493 594 A (NO 1 ENG COMPANY OF CHINA RAILWAY NO 8 ENG GROUP CO LTD ET AL.) 20 December 2022 (2022-12-20)<br>* paragraphs [0022] - [0024], [0041], [0042], [0050] *<br>- - - - - | 1-10 | |

TECHNICAL FIELDS
SEARCHED      (IPC)

G01C
G01S

The present search report has been drawn up for all claims

| Place of search | Date of completion of the search | Examiner |
|---|---|---|
| The Hague | 4 June 2024 | Zimmermann, Katrin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

**EP 4 417 938 A1**

## ANNEX TO THE EUROPEAN SEARCH REPORT
## ON EUROPEAN PATENT APPLICATION NO.

EP 24 15 1182

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2024

| Patent document cited in search report | | Publication date | Patent family member(s) | | Publication date |
|---|---|---|---|---|---|
| US 2011178708 | A1 | 21-07-2011 | CN | 102834696 A | 19-12-2012 |
| | | | EP | 2526379 A2 | 28-11-2012 |
| | | | JP | 2013517483 A | 16-05-2013 |
| | | | KR | 20120105054 A | 24-09-2012 |
| | | | TW | 201144760 A | 16-12-2011 |
| | | | US | 2011178708 A1 | 21-07-2011 |
| | | | WO | 2011088469 A2 | 21-07-2011 |
| CN 115493594 | A | 20-12-2022 | NONE | | |

EPO FORM P0459

For more details about this annex : see Official Journal of the European Patent Office, No. 12/82

15

**REFERENCES CITED IN THE DESCRIPTION**

**Patent documents cited in the description**

- IN 202311010469